# FASCICULE DE BREVET EUROPEEN

(11) **EP 1 808 609 B1**
(45) Date de publication et mention de la délivrance du brevet: **30.06.2010**
(21) Numéro de dépôt: 07100477.4
(22) Date de dépôt: 12.01.2007
(51) Int. Cl.: F16C 32/04, H02K 7/09

(54) **Dispositif de suspension magnétique d'un rotor comprenant un palier électromagnétique axial**
Magnetlageranordnung eines Rotors mit einem elektromagnetischen Axiallager
Magnetic support device for a rotor comprising an axial electromagnetic bearing

(30) Priorité: 13.01.2006 FR 0650121
(43) Date de publication de la demande: 18.07.2007
(73) Titulaire: SOCIETE DE MECANIQUE MAGNETIQUE, F-27950 Saint-Marcel (FR)
(72) Inventeur: Brunet, Maurice, 27950, SAINTE COLOMBE PRES VERNON (FR); Baudelocque, Luc, 27200, VERNON (FR); Lapierre, Armand, 27120, FONTAINE SOUS JOUY (FR)
(74) Mandataire: Thévenet, Jean-Bruno

(56) Documents cités:
- EP-A1- 1 223 357
- WO-A-97/02641
- DE-A1- 2 355 104
- DE-C- 824 231
- US-A- 4 180 946
- US-A- 5 084 644
- US-A- 5 153 475

## Description

La présente invention a pour objet un dispositif de suspension magnétique d'un rotor par rapport à un bâti, comprenant au moins un palier magnétique axial actif avec une bobine principale d'électroaimant disposée dans un stator solidaire du bâti et comprenant des surfaces portantes disposées en regard d'une armature rotorique essentiellement perpendiculaire à l'axe du rotor et présentant une extrémité phériphérique libre, un dispositif de détection de la position axiale du rotor et des circuits d'asservissement du courant circulant dans la bobine principale d'électroaimant.

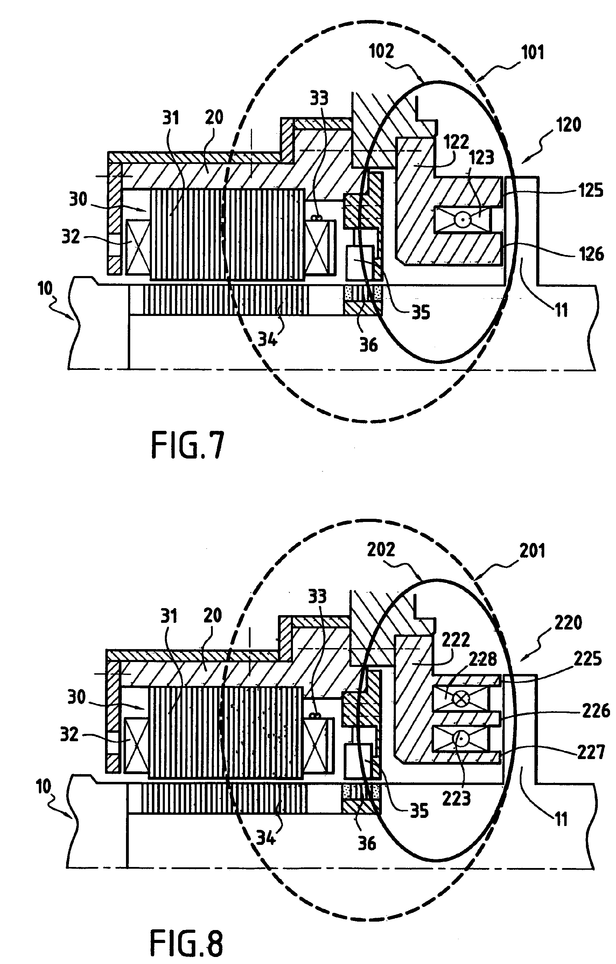

On connaît déjà un dispositif de ce type, comme par exemple celui illustré sur la Figure 7, qui comprend un palier axial 120 comprenant un stator 122 en matériau ferromagnétique présentant un logement annulaire concentrique à l'axe d'un rotor 10 pour recevoir une bobine 123. Les surfaces actives 125, 126 du stator 122 situées de part et d'autre du logement dans lequel est placée la bobine 123 coopèrent avec une armature 11 en forme de disque qui est solidaire du rotor 10 et est essentiellement perpendiculaire à l'axe du rotor 10. Un capteur 35 qui peut être de type inductif, optique ou capacitif est également associé au palier axial 120 pour détecter la position de l'armature rotorique 11 par rapport au stator 122 et fournir un signal à des circuits d'asservissement (non représentés) qui alimentent la bobine 123 pour créer un champ magnétique de telle sorte que les surfaces actives 125, 126 du stator 122 puissent exercer une force d'attraction sur l'armature 11 de manière à maintenir cette dernière dans une position axiale stable. Un palier axial du même type peut également être disposé de façon symétrique par rapport à l'armature 11 pour exercer une force d'attraction sur la deuxième face plane de l'armature 11 perpendiculaire à l'axe du rotor 10.

Le bâti 20 sur lequel est monté le stator 122 peut également servir de support à un palier magnétique radial 30 disposé à proximité du palier axial 120.

Le palier magnétique actif radial 30 peut comprendre un stator 31 en matériau ferromagnétique feuilleté qui est monté sur le bâti 20 et comprend des enroulements d'électroaimant 32 raccordés par des fils de liaison 33 à des circuits d'alimentation et d'asservissement (non représentés). Le palier magnétique radial 30 comprend en outre une armature annulaire 34, également en matériau magnétique feuilleté, qui est rapportée sur le rotor 10 et est donc concentrique à ce rotor 10. Un détecteur 35 de la position radiale du rotor 10 peut être placé sur un support solidaire du bâti 20 au voisinage du palier radial 30, pour détecter la position radiale de la surface de référence 36 de la périphérie du rotor 10 qui est en regard du détecteur 35. Les signaux issus du détecteur 35, qui peut être de type inductif, capacitif ou optique, sont appliqués aux circuits d'asservissement du courant d'alimentation des enroulements d'électroaimant 32. Dans l'exemple de la Figure 7, le détecteur 35 qui est de type inductif sert à la détection de la position du rotor 10 à la fois selon une direction axiale et selon deux directions mutuellement perpendiculaires dans le sens radial. La surface magnétique de référence 36 est prise en sandwich dans le sens axial entre deux surfaces en matériau non magnétique.

Dans le dispositif de la Figure 7, qui n'utilise qu'une seule bobine 123 au sein du palier magnétique axial 120, pour une armature rotorique 11 de diamètre extérieur donné, on obtient une surface portante maximale entre les surfaces actives 125, 126 situées de part et d'autre du logement de la bobine 123, et la face plane de l'armature rotorique 11 qui est située en regard de ces faces actives.

En revanche, la bobine 123 crée ,à travers les stators du palier magnétique radial 30 et du détecteur de position 35, les armatures rotoriques 34, 36, 11 et l'arbre 10, des circuits 101, 102 de circulation magnétique non nulle.

De façon plus particulière, le circuit 101 conduit à une magnétisation du palier radial 30 qui entraîne une perte de capacité de celui-ci et crée un couplage de la force radiale avec la force axiale.

Le circuit 102 conduit à une magnétisation des capteurs de position qui amène une perte de sensibilité de ceux-ci et crée un couplage des mesures avec la force axiale.

Le dispositif de la Figure 7 présente ainsi l'inconvénient majeur de créer d'importantes fuites magnétiques.

Pour remédier à ce problème et éviter la magnétisation de l'environnement de la butée magnétique constituant le palier axial, on a proposé la solution représentée sur la Figure 8, pour laquelle les éléments du rotor 10, du bâti 20 et du palier magnétique radial 30 qui sont inchangés portent les mêmes références et ne seront pas décrits à nouveau.

Dans le cas de la solution proposée avec le dispositif de la Figuré 8, le palier magnétique axial 220 comprend un stator 222 comprenant deux logements annulaires concentriques à l'axe du rotor 10 pour recevoir des bobines 223, 228.

En utilisant un nombre pair de bobines 223, 228 et en donnant à la bobine 228 un sens de circulation de courant inverse de celui de la bobine 223, on peut faire en sorte que chaque contour fermé 201, 202 entourant les bobines 223, 228 voie une excitation magnétique nulle.

La solution présentée sur la Figure 8 permet ainsi d'éviter la magnétisation de l'environnement du palier axial 220 par l'excitation magnétique créée par les bobines de ce palier axial. On s'affranchit ainsi des magnétisations parasites du palier radial 30, du capteur de position 35 et de tout l'environnement du palier axial.

Toutefois, du fait de l'utilisation de deux bobines 223, 228 situées dans deux logements ouverts, les surfaces actives 225, 226, 227 coopérant avec l'armature 11 sont réduites et il se produit donc une perte de surface portante pour une armature 11 en forme de disque de diamètre donné. Or, dans le cas de diverses applications, compte tenu des vitesses de votation élevées du rotor, il n'est pas possible d'accroître le diamètre de l'armature rotorique du palier axial au-delà de certaines limites, de sorte que la mise en oeuvre de bobines multiples au sein d'un palier axial devient problématique du fait que les surfaces actives résiduelles ne sont plus assez importantes et limitent la capacité du palier axial.

On connaît encore par le document US-A-5 084 644 un dispositif de suspension magnétique d'un rotor selon le préambule de la revendication 1 mettant en oeuvre une bobine de compensation qui est connectée en parallèle avec une bobine principale d'électroaimant et est parcourue par un courant de plus faible intensité que celle du courant circulant dans la bobine principale.

Les documents DE 824 231C et DE 2 355 104A décrivent des dispositifs de suspension magnétique d'un rotor avec au moins un palier magnétique axial et au moins une bobine de compensation. Selon le document DE 824 231 C (mentionné dans le document DE 2 355 104 A ) les ampère-tours dans la bobine de compensation étant la moitié ou le tiers des ampère-tours dans la bobine principale.

La présente invention vise à remédier aux inconvénients précités et à permettre de réaliser une butée magnétique de diamètre réduit au maximum pour une capacité donnée tout en évitant la création de fuites magnétiques se refermant dans la machine qui présentent le risque de provoquer des effets secondaires de mauvais fonctionnement d'autres dispositifs situés au voisinage d'un palier magnétique axial d'un dispositif de suspension magnétique d'un rotor.

Ces buts sont atteints, conformément à l'invention, grâce à un dispositif de suspension magnétique d'un rotor par rapport à un bâti, comprenant au moins un palier magnétique axial actif avec une bobine principale d'électroaimant disposée dans un premier stator solidaire du bâti et comprenant des surfaces portantes disposées en regard d'une première armature rotorique essentiellement perpendiculaire à l'axe du rotor et présentant une extrémité périphérique libre, un dispositif de détection de la position axiale du rotor, des circuits d'asservissement du courant circulant dans la bobine principale d'électroaimant, et une bobine de compensation qui est disposée à proximité de la bobine principale d'électroaimant, mais dans une position qui est située à l'extérieur des surfaces portantes du premier stator coopérant avec la première armature rotorique, **caractérisé en ce que** la bobine de compensation est connectée en série avec la bobine principale d'électroaimant, mais en étant parcourue par un courant en sens inverse de celui parcourant ladite bobine principale d'électroaimant.

Selon un premier mode particulier de réalisation, la bobine de compensation est disposée sur une paroi périphérique extérieure du premier stator et est située au-delà de l'extrémité périphérique libre de la première armature rotorique.

Selon un autre mode particulier de réalisation, la bobine de compensation est disposée sur une paroi périphérique intérieure du premier stator et est située en regard de la base de la première armature rotorique qui est rattachée au rotor.

Selon encore un autre mode particulier de réalisation, la bobine de compensation est disposée sur une paroi sensiblement radiale du premier stator, du côté opposé à la première armature rotorique.

La bobine de compensation et la bobine principale du palier axial actif sont concentriques.

Avantageusement, le dispositif selon l'invention comprend en outre au moins un palier magnétique radial actif disposé au voisinage du palier magnétique axial actif, le palier magnétique radial actif comprenant un deuxième stator solidaire du bâti et muni d'enroulements d'électroaimants et une deuxième armature rotorique cylindrique dont l'axe est confondu avec l'axe du rotor, un dispositif de détection de la position radiale du rotor et des circuits d'asservissement du courant circulant dans lesdits enroulements d'électroaimants dudit deuxième stator.

De façon plus particulière, selon un aspect de l'invention, le dispositif de détection de la position radiale du rotor comprend au moins un capteur interposé entre le deuxième stator et le premier stator.

Le dispositif peut en outre comprendre un moteur électrique d'entraînement du rotor, à proximité du palier axial actif.

D'une manière générale, le dispositif selon l'invention permet de réaliser une suspension magnétique intégrant une butée magnétique axiale à forte capacité sans fuite magnétique.

D'autres caractéristiques et avantages de l'invention ressortiront de la description suivante de modes particuliers de réalisation, en référence aux dessins annexés, sur lesquels :
- la Figure 1 est une vue en coupe axiale d'un exemple de dispositif de suspension magnétique selon l'invention,
- la Figure 2 est une vue schématique des circuits d'alimentation électrique des bobines du dispositif de la Figure 1,
- les Figures 3 et 4 sont des vues schématiques montrant deux exemples de mise en oeuvre possible du dispositif de suspension magnétique selon l'invention,
- Les Figures 5 et 6 sont des vues analogues à la Figure 1 montrant des variantes de réalisation du dispositif de suspension magnétique selon l'invention,
- la Figure 7 est une vue en coupe axiale d'un premier exemple de dispositif de suspension magnétique connu, et
- la Figure 8 est une vue en coupe axiale d'un deuxième exemple de dispositif de suspension magnétique connu.

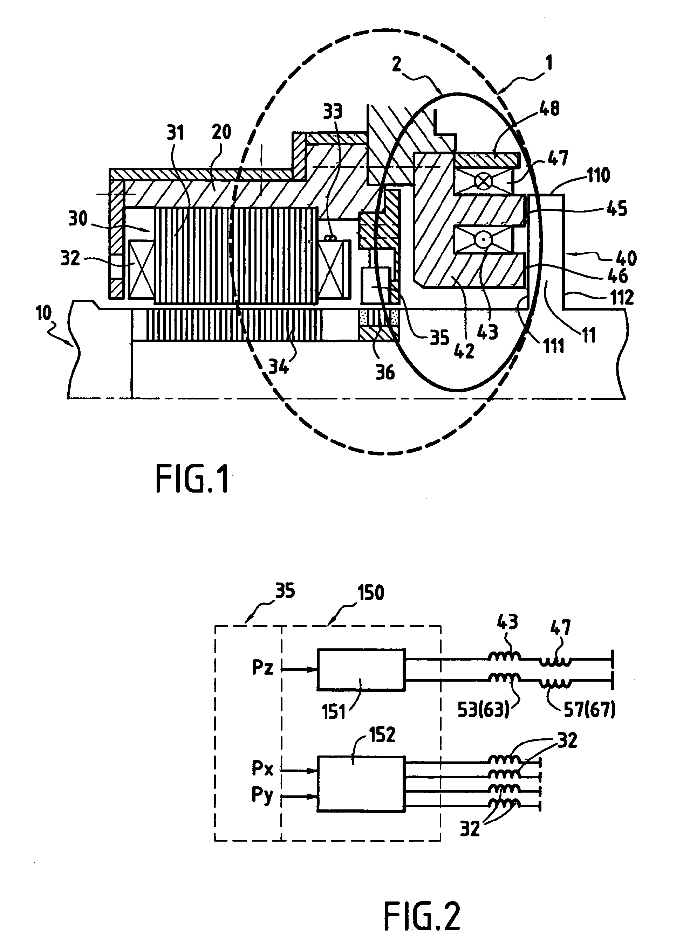

On a représenté sur la Figure 1 un exemple de dispositif de suspension magnétique d'un rotor 10 qui comprend essentiellement un palier magnétique axial actif 40 et un palier magnétique radial actif 30 qui permettent de supporter le rotor 10 sans contact par rapport à un bâti fixe 20.

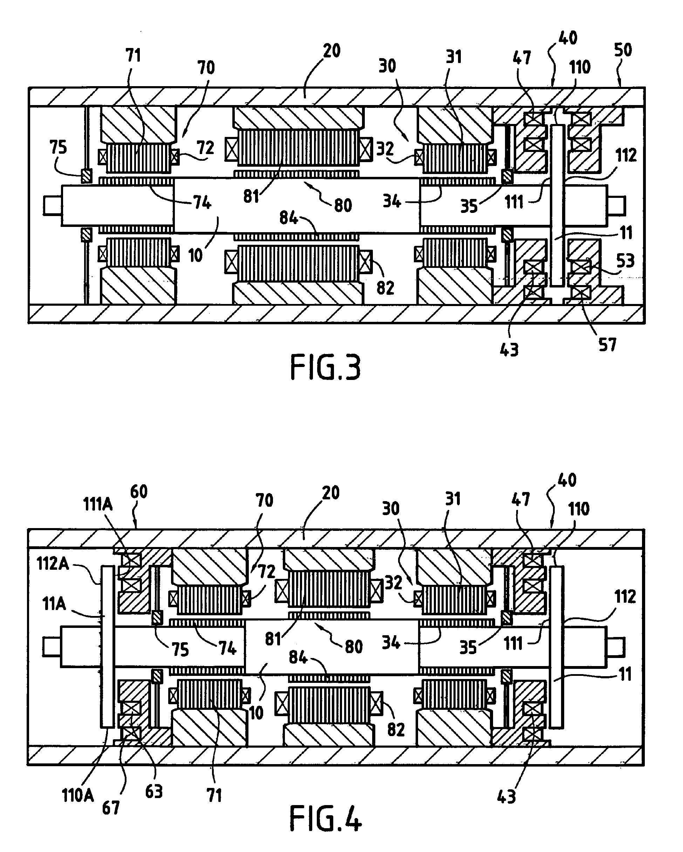

Sur la Figure 1, on n'a représenté qu'un seul palier magnétique radial 30 disposé au voisinage du palier magnétique axial 40. Toutefois, un deuxième palier radial 70 qui peut être ou non du même type que le palier radial 30 est normalement mis en oeuvre au voisinage d'une autre partie du rotor 10 à une certaine distance du palier radial 30, pour assurer le maintien du rotor de façon complète dans le sens radial (voir Figures 3 et 4).

Un second palier magnétique axial analogue au palier axial 40 peut par ailleurs être installé au voisinage du palier axial 40 de façon symétrique par rapport à l'armature rotorique 11 constituée sous la forme d'un disque perpendiculaire à l'axe du rotor 10. Dans ce cas, le premier palier axial 40 coopère avec une première face frontale 111 de l'armature rotorique 11 tandis que le deuxième palier axial 50 coopère avec une deuxième face frontale 112 de l'armature rotorique 11 (Figure 3).

Selon un autre mode de réalisation possible, une suspension magnétique complète comprend au voisinage de chacune des extrémités du rotor 10 un ensemble analogue composé d'un palier radial 30 respectivement 70 et d'un palier axial 40, respectivement 60, la disposition étant simplement symétrique par rapport au milieu du rotor 10, c'est-à-dire qu'un premier ensemble de palier comprend un palier axial 40 coopérant avec une face frontale 111 d'une première armature rotorique 11, le palier axial 40 étant situé au voisinage du premier palier radial 30 tandis qu'un deuxième ensemble de palier comprend un palier axial 60 coopérant avec une face frontale 111A d'une deuxième armature rotorique 11A, le palier axial 60 étant situé au voisinage du deuxième palier radial 70 entre ce dernier et la deuxième armature rotorique 11A (Figure 4). Dans le cas du mode de réalisation de la Figure 4, les faces frontales extérieures 112, 112A des armatures rotoriques 11, 11A ne sont pas utilisées, mais par l'action des paliers axiaux 40, 60 exercée sur les faces 111, 111A des armatures rotoriques 11, 11A, il est bien possible d'exercer des efforts antagonistes dans les deux sens selon l'axe du rotor, comme lorsque deux paliers axiaux 40, 50 coopèrent avec les deux faces frontales opposées 111, 112 d'une même armature rotorique 11 (Figure 3).

Si l'on se reporte à nouveau à la Figure 1, on voit un ensemble de palier conforme à un mode de réalisation préférentiel de l'invention.

Le palier axial actif 40 comprend une bobine principale d'électroaimant 43 disposée dans un stator 42 en matériau ferromagnétique solidaire du bâti 20. Le stator 42 définit des surfaces actives, ou surfaces portantes 45, 46, qui sont situées de part et d'autre du logement de la bobine principale 43 et sont placées en regard de la face frontale 111 de l'armature rotorique 11, à une faible distance définissant un entrefer. L'armature rotorique 11 solidaire du rotor 10 est essentiellement perpendiculaire à l'axe du rotor 10 et présente une extrémité périphérique libre 110 du côté opposé à la zone de raccordement au rotor 10.

Une bobine de compensation 47 est disposée sur le stator 42 de manière à être concentrique à la bobine principale 43, et à une certaine proximité de cette bobine principale 43, mais en étant située dans une position qui dans le sens radial se trouve au-delà de l'extrémité périphérique libre 110 de l'armature rotorique 11.

La bobine de compensation 47 est connectée en série avec la bobine principale 43, mais en étant bobinée ou connectée en sens inverse de celui de la bobine principale 43 de manière à être parcourue par un courant en sens inverse de celui qui parcourt la bobine principale 43. Ceci permet d'annuler les excitations magnétiques de tout parcours extérieur au palier magnétique axial 40 et donc de ne pas créer de magnétisation parasite dans les pièces environnantes.

Sur la Figure 1 à titre d'exemple on a représenté le courant parcourant la bobine principale 43 comme un vecteur ayant une pointe tournée vers l'avant tandis que le courant parcourant la bobine de compensation 47 est représenté par un vecteur dont la pointe est en arrière du plan de la figure. Les circuits fermés 1 et 2 de la Figure 1 représentent des parcours extérieurs à la butée axiale 40 dans lesquels les circulations magnétiques sont nulles.

De la sorte, bien que les surfaces actives 45, 46 du stator 42 situées en regard de l'armature rotorique 11 restent maximales pour une même dimension radiale de l'armature rotorique 11, il n'existe pas de magnétisation parasite du palier magnétique radial 30 ou du détecteur de position 35 disposés au voisinage du palier axial 40.

Une plaque de protection 48 peut être rapportée sur le stator 42 à l'extérieur de la bobine de compensation 47 afin de protéger celle-ci.

Le palier magnétique radial 30 et le détecteur de position 35 peuvent conserver la même structure que celle déjà décrite en référence aux Figures 7 et 8, de sorte que celle-ci ne sera pas décrite à nouveau. En particulier, le détecteur de position 35 peut détecter à la fois la position axiale du rotor et les positions radiales du rotor selon deux axes mutuellement perpendiculaires. Il serait toutefois également possible d'utiliser des détecteurs radiaux et un détecteur axial distincts.

Le palier magnétique radial 70 des Figures 3 et 4 peut lui-même être ou non semblable au palier magnétique radial 30. Dans les exemples représentés sur les Figures 3 et 4, l'armature rotorique cylindrique 74, le stator 71 et les enroulements 72 sont semblables aux éléments correspondants 34, 31, 32 du palier magnétique radial 30 et le détecteur de position 75 peut également être semblable au détecteur 35 pour ce qui concerne la détection radiale.

La Figure 2 montre de façon schématique que les circuits 50 d'alimentation et d'asservissement des bobines des différents paliers prennent en compte les signaux de position Px, Py, Pz délivrés par le détecteur de position 35.

La bobine principale 43 et la bobine de compensation 47 du palier axial 40 qui sont montées en série sont alimentées à partir de circuits d'asservissement 151 auxquels est appliqué le signal Pz du détecteur de position 35 donnant une information sur la position axiale du rotor 10.

De manière similaire, les enroulements 32 du palier radial 30 sont alimentés à partir de circuits d'asservissement 152 auxquels sont appliqués les signaux Px, Py du détecteur de position 35 donnant des informations sur la position radiale du rotor 10. Naturellement, les signaux issus de détecteurs supplémentaires peuvent être appliqués aux circuits 151 ou 152, selon divers modes de réalisation connus.

Dans les exemples des Figures 3 et 4, les paliers axiaux 50 et 60 peuvent être réalisés de manière similaire au palier axial 40 et peuvent ainsi comprendre une bobine principale 53 respectivement 63, ainsi qu'une bobine de compensation 57 respectivement 67 par exemple située radialement au-delà de la paroi périphérique 110 respectivement 110A de l'armature rotorique 11 respectivement 11A, l'asservissement en position axiale étant réalisé à partir du détecteur de position 35. Les bobines 53 et 57 ou 63 et 67 peuvent être alimentées comme les bobines 43 et 47 à partir des circuits d'asservissement 151.

Comme on peut le voir sur les Figures 3 et 4, un moteur électrique 80, comprenant une armature rotorique 84 et un stator feuilleté 81 muni d'enroulements 82, peut être disposé sur le rotor 10, par exemple entre les paliers radiaux 30 et 70. Le fait même que le dispositif de suspension magnétique axiale selon l'invention soit sans fuite magnétique réduit les risques de perturbations dans le fonctionnement du moteur 80 comme dans celui des paliers radiaux 30, 70 ou des détecteurs 35, 75.

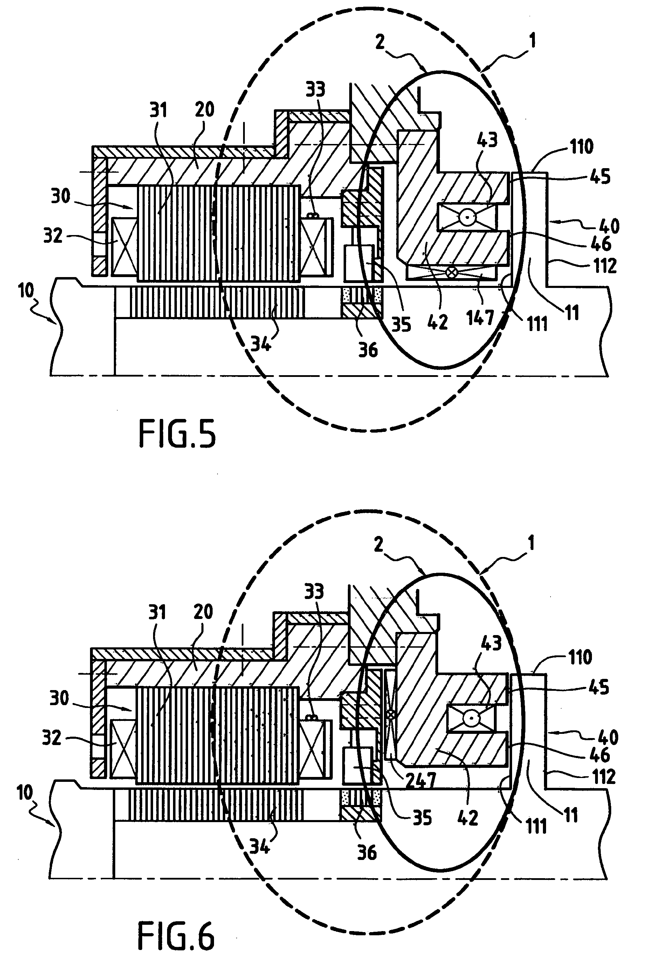

Le mode de réalisation de la Figure 1 constitue un mode préférentiel. Toutefois, d'autres variantes de réalisation sont possibles, telles que celles illustrées sur les Figures 5 et 6.

En effet, la bobine de compensation peut être disposée à proximité de la bobine principale 43 à l'extérieur des surfaces portantes de la carcasse magnétique coopérant avec la première armature rotorique, dans des positions différentes de celle de la Figure 1.

Sur la Figure 5, on voit ainsi une bobine de compensation 147 qui est disposée sur une paroi périphérique intérieure du premier stator 42, à l'extérieur des surfaces portantes 45, 46. La bobine de compensation 147 est située en regard de la base de l'armature rotorique 11 au voisinage de la surface périphérique du rotor 10, dans la zone de plus faible diamètre de l'armature 11 et donc de moindre force portante.

Sur la Figure 6, on voit une autre variante de réalisation dans laquelle la bobine de compensation 247 est disposée sur une paroi essentiellement radiale du stator 42 du côté opposé aux surfaces portantes 45, 46 qui font face à l'armature rotorique 11.

La bobine de compensation 147 ou 247 n'a pas nécessairement la même géométrie que la bobine principale 43 et peut être par exemple plus aplatie, dès lors qu'elle définit un nombre d'ampères-tours équivalent.

Dans le cas des variantes des Figures 5 et 6, la bobine de compensation 147 ou 247 est toujours connectée en série avec la bobine principale 43, mais en étant bobinée ou connectée en sens inverse de cette bobine principale 43, comme dans le cas des bobines 47 et 43 des Figures 1 et 2, de telle sorte que la somme des ampères-tours des bobines 43 et 147 ou 43 et 247 soit sensiblement nulle.

Naturellement, diverses modifications et adjonctions peuvent être apportées aux modes de réalisation qui viennent d'être décrits.

Ainsi l'invention s'applique aussi au cas où un palier magnétique actif est du type à auto-détection de position et ne comprend pas de détecteur de position séparé qui lui soit associé.

## Revendications

1. Dispositif de suspension magnétique d'un rotor (10) par rapport à un bâti (20), comprenant au moins un palier magnétique axial actif (40) avec une bobine principale d'électroaimant (43) disposée dans un premier stator (42) solidaire du bâti (20) et comprenant des surfaces portantes (45, 46) disposées en regard d'une première armature rotorique (11) essentiellement perpendiculaire à l'axe du rotor (10) et présentant une extrémité périphérique libre (110), un dispositif (35) de détection de la position axiale du rotor (10), des circuits (151) d'asservissement du courant circulant dans la bobine principale d'électroaimant (43), et une bobine de compensation (47 ; 147 ; 247) qui est disposée à proximité de la bobine principale d'électroaimant (43), mais dans une position qui est située à l'extérieur des surfaces portantes (45, 46) du premier stator (42) coopérant avec la première armature rotorique (11), **caractérisé en ce que** la bobine de compensation (47) est connectée en série avec la bobine principale d'électroaimant (43), mais en étant parcourue par un courant en sens inverse de celui parcourant ladite bobine principale d'électroaimant (43).

2. Dispositif selon la revendication 1, **caractérisé en ce qu'**il comprend en outre au moins un palier magnétique radial actif (30) disposé au voisinage du palier magnétique axial actif (40), le palier magnétique radial actif (30) comprenant un deuxième stator (31) solidaire du bâti (20) et muni d'enroulements d'électroaimants (32) et une deuxième armature rotorique (34) cylindrique dont l'axe est confondu avec l'axe du rotor (10), un dispositif (35, 36) de détection de la position radiale du rotor (10) et des circuits (152) d'asservissement du courant circulant dans lesdits enroulements d'électroaimants (32) dudit deuxième stator (31).

3. Dispositif selon la revendication 2, **caractérisé en ce que** le dispositif (35, 36) de détection de la position radiale du rotor (10) comprend au moins un .capteur interposé entre le deuxième stator (31) et le premier stator (42).

4. Dispositif selon la revendication 3, **caractérisé en ce que** le dispositif de détection de la position axiale du rotor (10) est combiné avec les dispositifs (35, 36) de détection de la position radiale du rotor (10).

5. Dispositif selon l'une quelconque des revendications 1 à 4, **caractérisé en ce que** la bobine de compensation (47) est disposée sur une paroi périphérique extérieure du premier stator (42) et est située au-delà de l'extrémité périphérique libre (110) de la première armature rotorique (11).

6. Dispositif selon l'une quelconque des revendications 1 à 4, **caractérisé en ce que** la bobine de compensation (147) est disposée sur une paroi périphérique intérieure du premier stator (42) et est située en regard de la base de la première armature rotorique (11) qui est rattachée au rotor.

7. Dispositif selon l'une quelconque des revendications 1 à 4, **caractérisé en ce que** la bobine de compensation (247) est disposée sur une paroi sensiblement radiale du premier stator (42), du côté opposé à la première armature rotorique (11).

8. Dispositif selon la revendication 5, **caractérisé en ce qu'**une plaque extérieure(48) de protection de la bobine de compensation (47) est rapportée sur le premier stator (42).

9. Dispositif selon l'une quelconque des revendications 1 à 6 et 8, **caractérisé en ce que** la bobine de compensation (47) et la bobine principale (43) du palier magnétique axial actif (40) sont concentriques.

10. Dispositif selon l'une quelconque des revendications 1 à 9, **caractérisé en ce qu'**il comprend en outre un moteur électrique (80) d'entraînement du rotor (10), à proximité du palier magnétique axial actif (40).

## Claims

1. A device for magnetically suspending a rotor (10) relative to a structure (20), the device comprising at least one axial active magnetic bearing (40) with a main electromagnet coil (43) disposed in a first stator (42) secured to the structure (20) and having load-bearing surfaces (45, 46) placed facing a first rotor armature (11) extending substantially perpendicularly to the axis of the rotor (10) and presenting a free peripheral end (110), a device (35) for detecting the axial position of the rotor (10), and circuits (151) for servo-controlling the current flowing in the main electromagnet coil (43), the device being **characterized in that** it further comprises a compensation coil (47; 147; 247) that is disposed close to the main electromagnet coil (43), but in a position that is situated away from the load-bearing surfaces (45, 46) of the first stator (42) that cooperate with the first rotor armature (11), the compensation coil (47) being connected in series with the main electromagnet coil (43) and carrying current in a direction opposite to that carried by said main electromagnet coil (43).

2. A device according to claim 1, **characterized in that** it further includes at least one radial active magnetic bearing (30) disposed in the vicinity of the axial active magnetic bearing (40), the radial active magnetic bearing (30) comprising a second stator (31) secured to the structure (20) and provided with electromagnet windings (32), and a cylindrical second rotor armature (34) of axis coinciding with the axis of the rotor (10), a device (35, 36) for detecting the radial position of the rotor (10), and circuits (152) for servo-controlling the current carried by said electromagnet windings (32) of said second stator (31).

3. A device according to claim 2, **characterized in that** the device (35, 36) for detecting the radial position of the rotor (10) includes at least one sensor interposed between the second stator (31) and the first stator (42).

4. A device according to claim 3, **characterized in that** the device for detecting the axial position of the rotor (10) is combined with the devices (35, 36) for detecting the radial position of the rotor (10).

5. A device according to any one of claims 1 to 4, **characterized in that** the compensation coil (47) is disposed on the peripherally outer wall of the first stator (42) and is situated beyond the free peripheral end (110) of the first rotor armature (11).

6. A device according to any one of claims 1 to 4, **characterized in that** the compensation coil (47) is disposed on the inner peripheral wall of the first stator (42) and is situated facing the base of the first rotor armature (11) that is connected to the rotor.

7. A device according to any one of claims 1 to 4, **characterized in that** the compensation coil (247) is disposed on a substantially radial wall of the first stator (42) on its side opposite from the first rotor armature (11).

8. A device according to claim 5, **characterized in that** an outer protective plate (48) of the compensation coil (47) is fitted on the first stator (42).

9. A device according to any one of claims 1 to 6 and 8, **characterized in that** the compensation coil (47) and the main coil (43) of the axial active magnetic bearing (40) are concentric.

10. A device according to any one of claims 1 to 9, **characterized in that** it further includes an electric motor (80) for driving the rotor (10) in the vicinity of the axial active magnetic bearing (40).

## Patentansprüche

1. Vorrichtung zur magnetischen Aufhängung eines Rotors (10) in Bezug zu einem Gehäuse (20), umfassend mindestens ein aktives axiales Magnetlager (40) mit einer Hauptspule eines Elektromagneten (43), die in einem ersten Stator (42), der mit dem Gehäuse (20) verbunden ist, angeordnet ist, und umfassend Tragflächen (45, 46), die gegenüber einem ersten Rotorbeschlag (11) im wesentlichen senkrecht zur Achse des Rotors (10) angeordnet sind und ein freies peripheres Ende (110) aufweisen, eine Vorrichtung (35) zur Erfassung der Axialposition des Rotors (10), Steuerschaltungen (151) für den in der Hauptspule des Elektromagneten (43) zirkulierenden Strom und eine Ausgleichsspule (47; 147; 247), die in der Nähe der Hauptspule des Elektromagneten (43) angeordnet ist, allerdings in einer Position, die sich außerhalb der Tragflächen (45, 46) des ersten Stators (42), der mit dem ersten Rotorbeschlag (11) zusammenwirkt, befindet, **dadurch gekennzeichnet, daß** die Ausgleichsspule (47) in Serie mit der Hauptspule des Elektromagneten (43) geschaltet ist, aber von einem Strom in umgekehrter Richtung zu jener, in der die Hauptspule des Elektromagneten (43) durchströmt wird, durchlaufen wird.

2. Vorrichtung nach Anspruch 1, **dadurch gekennzeichnet, daß** sie ferner mindestens ein aktives radiales Magnetlager (30) umfaßt, das in der Nähe des aktiven axialen Magnetlagers (40) angeordnet ist, wobei das aktive radiale Magnetlager (30) einen zweiten Stator (31), der mit dem Gehäuse (20) verbunden und mit elektromagnetischen Wicklungen (32) versehen ist, und einen zweiten zylindrischen Rotorbeschlag (34) umfaßt, dessen Achse mit der Achse des Rotors (10) zusammen fällt, wobei eine Vorrichtung (35, 36) zur Erfassung der Radialposition des Rotors (10) und Steuerschaltungen (152) für den in den elektromagnetischen Wicklungen (32) des zweiten Stators (31) zirkulierenden Strom vorgesehen sind.

3. Vorrichtung nach Anspruch 2, **dadurch gekennzeichnet, daß** die Vorrichtung (35, 36) zur Erfassung der Radialposition des Rotors (10) mindestens einen Fühler umfaßt, der zwischen dem zweiten Stator (31) und dem ersten Stator (42) angeordnet ist.

4. Vorrichtung nach Anspruch 3, **dadurch gekennzeichnet, daß** die Vorrichtung zur Erfassung der Axialposition des Rotors (10) mit den Vorrichtungen (35, 36) zur Erfassung der Radialposition des Rotors (10) kombiniert ist.

5. Vorrichtung nach einem der Ansprüche 1 bis 4, **dadurch gekennzeichnet, daß** die Ausgleichsspule (47) auf einer äußeren Umfangswand des ersten Stators (42) angeordnet ist und über das freie periphere Ende (110) des ersten Rotorbeschlags (11) hinausgeht.

6. Vorrichtung nach einem der Ansprüche 1 bis 4, **dadurch gekennzeichnet, daß** die Ausgleichsspule (147) auf einer inneren Umfangswand des ersten Stators (42) und gegenüber der Basis des ersten Rotorbeschlags (11), der auf den Rotor aufgesetzt ist, angeordnet ist.

7. Vorrichtung nach einem der Ansprüche 1 bis 4, **dadurch gekennzeichnet, daß** die Ausgleichsspule (247) auf einer im wesentlichen radialen Wand des ersten Stators (42) auf der dem ersten Rotorbeschlag (11) gegenüber liegenden Seite angeordnet ist.

8. Vorrichtung nach Anspruch 5, **dadurch gekennzeichnet, daß** eine äußere Schutzplatte (48) für die Ausgleichsspule (47) auf dem ersten Stator (42) aufgesetzt ist.

9. Vorrichtung nach einem der Ansprüche 1 bis 6 und 8, **dadurch gekennzeichnet, daß** die Ausgleichsspule (47) und die Hauptspule (43) des aktiven axialen Magnetlagers (40) konzentrisch sind.

10. Vorrichtung nach einem der Ansprüche 1 bis 9, **dadurch gekennzeichnet, daß** sie ferner einen Elektromotor (80) für den Antrieb des Rotors (10) in der Nähe des aktiven axialen Magnetlagers (40) umfaßt.
